# NEUE EUROPÄISCHE PATENTSCHRIFT

(11) **EP 2 449 375 B2**
(45) Veröffentlichungstag und Bekanntmachung des Hinweises auf die Entscheidung über den Einspruch: **08.09.2021**
(45) Hinweis auf die Patenterteilung: 22.10.2014
(21) Anmeldenummer: 10715220.9
(22) Anmeldetag: 20.04.2010
(51) Int. Cl.: G01N 33/00, G01N 27/407, G01N 27/417, G01N 27/419, F02D 35/00, F02D 41/14

(54) **SENSORELEMENT ZUR BESTIMMUNG EINER EIGENSCHAFT EINES GASES**
SENSOR ELEMENT FOR DETERMINING A PROPERTY OF A GAS
ÉLÉMENT CAPTEUR POUR DÉTERMINER UNE PROPRIÉTÉ D'UN GAZ

(30) Priorität: 29.06.2009 DE 102009027276
(43) Veröffentlichungstag der Anmeldung: 09.05.2012
(73) Patentinhaber: Robert Bosch GmbH, 70442 Stuttgart (DE)
(72) Erfinder: RENZ, Hans-Joerg, 70771 Leinfelden-Echterdingen (DE); SCHNEIDER, Jens, 71229 Leonberg (DE)
(86) Internationale Anmeldenummer: PCT/EP2010/055158
(87) Internationale Veröffentlichungsnummer: WO 2011/000584

(56) Entgegenhaltungen:
- EP-A1- 0 678 740
- EP-A1- 1 722 219
- EP-A2- 0 709 668
- DE-A1- 10 259 782
- JP-A- H0 926 409
- JP-A- 11 014 592
- JP-A- 2003 294 698
- JP-A- 2006 343 353
- JP-A- 2009 036 608
- RIEGEL J ET AL: "Exhaust gas sensors for automotive emission control" SOLID STATE IONICS, NORTH HOLLAND PUB. COMPANY. AMSTERDAM; NL, NL LNKD- DOI:10.1016/S0167-2738(02)00329-6, Bd. 152-153, 1. Dezember 2002 (2002-12-01) , Seiten 783-800, XP004398309 ISSN: 0167-2738
- DUBBE A: "Fundamentals of solid state ionic micro gas sensors" SENSORS AND ACTUATORS B, ELSEVIER SEQUOIA S.A., LAUSANNE, CH LNKD- DOI:10.1016/S0925-4005(02)00317-9, Bd. 88, Nr. 2, 15. Januar 2003 (2003-01-15), Seiten 138-148, XP004399082 ISSN: 0925-4005

## Beschreibung

### Stand der Technik

Die Erfindung geht aus von bekannten Sensorelementen zur Erfassung mindestens einer Eigenschaft eines Gases in einem Messgasraum. Bei dieser Eigenschaft kann es sich beispielsweise um eine physikalisch und/oder chemisch nachweisbare Eigenschaft handeln. Insbesondere kann es sich bei dieser Eigenschaft um einen Anteil, das heißt beispielsweise einen Partialdruck oder einen Prozentsatz mindestens einer Gaskomponente handeln. Bei dieser mindestens einen Gaskomponente kann es sich beispielsweise um Sauerstoff und/oder um Stickoxide (NOx) handeln. Derartige Sensorelemente sind aus dem Stand der Technik grundsätzlich bekannt und beispielsweise in Robert Bosch GmbH: Sensoren im Kraftfahrzeug, 2. Ausgabe, April 2007, Seiten 154 bis 159, und in EP 0678740, EP 0831322 sowie EP 0709668 beschrieben. Die dort dargestellten Sensoraufbauten können grundsätzlich auch im Rahmen der vorliegenden Erfindung erfindungsgemäß modifiziert werden.

Derartigen Sensorelementen, insbesondere Sauerstoff-Abgassonden (so genannten Lambdasonden) oder NOx-Abgassonden, insbesondere rohemissionstauglichen elektrochemischen NOx-Abgassonden für Ottomotor- oder Dieselmotor-Anwendungen, ist es bislang gemeinsam, dass diese mindestens ein keramisches Sensorelement beinhalten, welches als Laminat aus Festelektrolytfolien, wie beispielsweise Yttrium-stabilisiertem Zirkondioxid (YSZ) gefertigt ist. Diese Sonden arbeiten üblicherweise nach einem elektrochemischen Funktionsprinzip. Beispielsweise wird zum Nachweis von NOx der Anteil des NOx am Abgas über eine oder mehrere Pumpzellen (Pumpkaskade) schrittweise angereichert, und in einer letzten Kammer bestimmt, beispielsweise amperometrisch. Derartige Sensoren werden auch als Doppel- oder Mehrkammersensoren oder als Pumpzellenkaskadensensoren bezeichnet. Dieses Funktionsprinzip erfordert in der Regel mehrere Nernst- und/oder Pumpzellen, die in den Gesamtaufbau des Sensorelements integriert sind.

Eine Problematik an derartigen Aufbauten, insbesondere mehrzelligen Aufbauten, besteht jedoch in der Regel darin, dass in bekannten Sensorelementen der Festelektrolyt neben der Funktion als Elektrolyt auch die Funktion eines Trägermaterials übernimmt. Hieraus ergeben sich jedoch hohe Anforderungen hinsichtlich der mechanischen Stabilität und der Thermoschockfestigkeit dieses Materials. Da die mechanische Festigkeit und die Belastbarkeit üblicher Festelektrolytmaterialien jedoch üblicherweise mit steigender Dotierung und somit mit steigender Ionenleitfähigkeit abnimmt (ein Festigkeitsoptimum entspricht in der Regel nicht einem Leitfähigkeitsoptimum), ergibt sich aus diesen Bedingungen ein Zielkonflikt. Eine weitere, mit der oben beschriebenen Problematik verbundene technische Herausforderung ist die Beseitigung von Leckströmen. Da die Dotierung beispielsweise aufgrund der benötigten mechanischen Stabilität nicht beliebig gesteigert werden kann und da dennoch für den Betrieb der Sensorelemente eine vorgegebene Ionenleitfähigkeit erreicht werden muss, werden die Sensorelemente in vielen Fällen bei erhöhten Temperaturen betrieben. Zu diesem Zweck werden beispielsweise ein oder mehrere Heizelemente verwendet. Dabei können jedoch unter bestimmten Bedingungen, insbesondere bei höheren Temperaturen, aufgrund der ionischen Leitfähigkeit störende Leckströme in dem Sensorelement auftreten, welche sich beispielsweise zwischen den Elektroden des Sensorelements und dem Heizelement ausbilden. Aus diesem Grund werden in der Regel sowohl das Heizelement als auch die Elektroden in den für den Betrieb des Sensorelements nicht erforderlichen Bereichen aufwändig isoliert. Bei Verwendung von Schichtaufbauten werden in der Regel auch Durchkontaktierungen zu tieferen Schichtebenen aufwändig auf diese Weise isoliert. Trotz dieses Aufwands, welcher für die Herstellung von Isolationsschichten erforderlich ist, tritt bei der Herstellung der Sensorelemente in der Regel ein Ausschuss auf, welcher durch hohe Leckströme bedingt ist.

### Offenbarung der Erfindung

Es werden daher ein Sensorelement zur Bestimmung einer Eigenschaft eines Gases, eine das Sensorelement umfassende Sensoranordnung sowie eine Verwendung des Sensorelements vorgeschlagen, welche die Nachteile bekannter Sensorelemente, Sensoranordnungen und Verfahren zumindest teilweise vermeiden. Das Sensorelement dient zur Bestimmung mindestens einer Eigenschaft eines Gases in einem Messgasraum, insbesondere zum Nachweis einer Gaskomponente in einem Gasgemisch. Beispielsweise kann es sich bei dem Gasgemisch um ein Abgas einer Brennkraftmaschine handeln, insbesondere eines Dieselmotors oder eines Ottomotors. Auch andere Ausgestaltungen des Messgasraums sind jedoch grundsätzlich möglich, so dass der Messgasraum auch beispielsweise ein Raum eines weiteren oder größeren Sensorelements sein kann. Die mindestens eine Eigenschaft des Gases kann beispielsweise, wie oben dargestellt, einen Anteil, also beispielsweise einen Prozentsatz und/oder einen Partialdruck, einer Gaskomponente sein oder umfassen. Bei dieser Gaskomponente kann es sich insbesondere um Sauerstoff und/oder um Stickoxide (NOx) handeln. Dementsprechend kann das Sensorelement beispielsweise als elektrochemischer NOx-Abgassensor ausgestaltet sein, insbesondere als rohemissionstauglicher elektrochemischer NOx-Abgassensor. Das Sensorelement kann insbesondere, wie unten beschrieben wird, monolithisch ausgestaltet sein, also als monolithischer, elektrochemischer NOx- und/oder O₂-Abgassensor.

Das Sensorelement umfasst mindestens eine erste Zelle und mindestens eine zweite Zelle. Die erste Zelle umfasst mindestens eine erste Elektrode, mindestens eine zweite Elektrode und mindestens einen die erste Elektrode und die zweite Elektrode verbindenden ersten Festelektrolyten. Die zweite Zelle umfasst mindestens eine dritte Elektrode, mindestens eine vierte Elektrode und mindestens einen die dritte Elektrode und die vierte Elektrode verbindenden zweiten Festelektrolyten. Die zweite Elektrode ist dabei in mindestens einem ersten Elektrodenhohlraum angeordnet, und die vierte Elektrode in mindestens einem zweiten Elektrodenhohlraum. Der erste Elektrodenhohlraum ist dabei mit Gas aus dem Messgasraum beaufschlagbar, und der zweite Elektrodenhohlraum ist mit Gas aus dem ersten Elektrodenhohlraum baufschlagbar. Der erste Festelektrolyt und der zweite Festelektrolyt weisen jeweils ein Festelektrolytmaterial auf, wobei das Festelektrolytmaterial in ein Trägerelement eingebettet ist, welches eine geringere ionische Leitfähigkeit aufweist als das Festelektrolytmaterial. Die Festelektrolytmaterialien können getrennt oder auch ganz oder teilweise identisch sein.

Die mindestens eine erste Zelle, wobei auch mehrere erste Zellen vorgesehen sein können (beispielsweise im Rahmen einer Pumpkaskade, welche zwei erste Zellen, drei erste Zellen oder mehr erste Zellen umfasst) kann beispielsweise derart ausgestaltet sein, dass die erste Elektrode direkt oder indirekt mit dem Messgasraum in Verbindung steht. Beispielsweise kann die erste Elektrode über mindestens eine gasdurchlässige Schicht mit dem Messgasraum in Verbindung stehen, so dass Gas von der ersten Elektrode an den Messgasraum überführt werden kann oder umgekehrt. Alternativ kann die erste Elektrode jedoch auch in einem von dem Messgasraum und den Elektrodenhohlräumen getrennten weiteren Raum angeordnet sein, so dass beispielsweise eine Abfuhr von an der ersten Elektrode gebildetem bzw. ausgebautem Gas in den weiteren Raum möglich ist. Die Elektroden können insbesondere ein Elektrodenmaterial umfassen, beispielsweise mindestens ein Edelmetall, welche mit dem Festelektrolytmaterial in Verbindung gebracht wird. Insbesondere kann es sich dabei um Platin und/oder Palladium und/oder Rhodium handeln. Insbesondere kann es sich bei dem Elektrodenmaterial um mindestens eine Edelmetall-Keramik-Verbindung-handeln, beispielsweise ein so genanntes Cermet. Der erste Elektrodenhohlraum kann insbesondere in einer tiefer liegenden Schichtebene eines Schichtaufbaus des Sensorelements angeordnet sein und ist von dem Messgasraum getrennt ausgebildet. Zur Beaufschlagung des ersten Elektrodenhohlraums mit Gas aus dem Messgasraum kann beispielsweise mindestens eine Öffnung und/oder mindestens eine Zutrittsbohrung und/oder eine andere Art von Verbindung vorgesehen sein. Die Verbindung zwischen dem Messgasraum und dem ersten Elektrodenhohlraum kann beispielsweise mindestens einen eine Strömung und/oder eine Diffusion des Gases und/oder einer Komponente des Gases verminderndes Element umfassen, beispielsweise mindestens eine Diffusionsbarriere und/oder mindestens eine Strömungsbarriere. Beispielsweise kann die mindestens eine Diffusionsbarriere mindestens ein poröses Material umfassen, beispielsweise poröses Al₂O₃.

Der erste Elektrodenhohlraum und der zweite Elektrodenhohlraum, wobei auch mehrere derartiger Elektrodenhohlräume vorgesehen sein können, sind ebenfalls derart getrennt ausgebildet, dass ein Gasaustausch zwischen dem ersten Elektrodenhohlraum und dem zweiten Elektrodenhohlraum oder umgekehrt zumindest begrenzt erfolgt. Insbesondere können diese durch mindestens ein Begrenzungselement voneinander getrennt sein, welches einen Strom und/oder eine Diffusion des Gases oder mindestens einer Gaskomponente des Gases zumindest teilweise begrenzt, insbesondere durch eine Diffusionsbarriere und/oder mindestens eine Strömungsbarriere. Grundsätzlich kann es sich bei dem ersten Elektrodenhohlraum und dem zweiten Elektrodenhohlraum auch um zwei oder mehr getrennte Teil-Hohlräume ein und desselben Hohlraums handeln, welche durch das mindestens eine Begrenzungselement voneinander getrennt sind.

Die dritte Elektrode kann direkt oder indirekt wiederum mit dem Messgasraum in Verbindung stehen, beispielsweise wiederum durch mindestens eine gasdurchlässige Schutzschicht und/oder durch mindestens eine Öffnung. Auf diese Weise kann beispielsweise ein im Wesentlichen ungehinderter Gasaustausch zwischen der dritten Elektrode und dem Messgasraum erfolgen. Alternativ kann jedoch, analog zur ersten Elektrode, die dritte Elektrode wiederum in einem weiteren Raum angeordnet sein, welcher von dem Messgasraum getrennt ausgebildet ist, so dass beispielsweise an der dritten Elektrode ausgebautes Gas in den weiteren Raum entweichen kann. Die dritte Elektrode und die erste Elektrode sind vorzugsweise getrennt ausgebildet, wobei jedoch grundsätzlich auch eine zumindest teilweise gemeinsame Ausbildung möglich ist.

Der erste Festelektrolyt und der zweite Festelektrolyt sind beispielsweise als getrennte Festelektrolyten ausgebildet. Dabei kann auch jede der genannten Zellen mehrere derartiger Festelektrolyten umfassen, beispielsweise in Form von mehreren Festelektrolyt-Feldern (Patches). Alternativ können sich die erste Zelle und die zweite Zelle auch mindestens einen gemeinsamen Festelektrolyten teilen, so dass der erste Festelektrolyt und der zweite Festelektrolyt auch zumindest teilweise bauteilidentisch ausgestaltet sein können. Bevorzugt ist jedoch eine getrennte Ausgestaltung des ersten Festelektrolyten und des zweiten Festelektrolyten.

Zusätzlich zu der ersten Zelle und der zweiten Zelle, welche miteinander in Verbindung stehen, können vorzugsweise auch weitere Zellen vorgesehen sein, gegebenenfalls auch in Verbindung mit weiteren Hohlräumen, welche wiederum miteinander in Verbindung stehen können. Beispielsweise kann die erste Zelle, wie unten noch näher ausgeführt wird, eine Kaskade von Teil-Zellen umfassen, welche gemeinsam als erste Zelle wirken und in welcher beispielsweise eine Aufkonzentration einer Gaskomponente erfolgen kann. Analog können auch mehrere zweite Zellen vorgesehen sein.

Das Trägerelement kann ausgestaltet sein, um eine optimale Isolationswirkung des Trägerelements zu erreichen. Gleichzeitig ist dieses Trägerelement für eine optimale Festigkeit ausgestaltet, und zwar mit einer höheren mechanischen Festigkeit als das Festelektrolytmaterial. Auf diese Weise ist eine getrennte Optimierung der Stabilität des Sensorelements und der elektrolytischen Eigenschaften möglich. Insbesondere kann das Trägerelement mindestens eine Trägerfolie umfassen und/oder ausgestaltet sein, um die erste Zelle und/oder die zweite Zelle mechanisch zu stabilisieren. Auf diese Weise ist eine Optimierung der Festigkeit und der Isolationswirkung möglich.

Das Trägerelement kann insbesondere mindestens ein Trägermaterial aufweisen, insbesondere aus mindestens einem Trägermaterial bestehen, wobei das Trägermaterial mindestens ein Isolatormaterial umfasst. Dieses-Isolatormaterial kann insbesondere mindestens eine der folgenden Materialien aufweisen oder aus einem der folgenden Materialien bestehen: ein keramisches Isolatormaterial, insbesondere ein Aluminiumoxid, insbesondere Al₂O₃; ein keramisches Oxid, insbesondere ein Aluminiumoxid; ein keramisches Oxid, insbesondere ein Aluminiumoxid, mit einem Fremdphasenanteil von weniger als 5%; ein keramisches Oxid, insbesondere ein Aluminiumoxid, mit einem Glasphasenanteil von bis zu 50%.

Das Sensorelement kann insbesondere mindestens einen Schichtaufbau aufweisen, also einen Aufbau, bei welchem mehrere Schichtebenen, beispielsweise mehrere Folien, übereinander angeordnet sind. Dieser Schichtaufbau kann beispielsweise durch ein Laminierverfahren, gegebenenfalls gefolgt von einem oder mehreren Sinterschritten hergestellt werden. Insbesondere kann der Schichtaufbau mindestens zwei Trägerelemente umfassen, vorzugsweise drei oder mehr Trägerelemente, insbesondere in Form von keramischen Folien, beispielsweise in Form von keramischen Isolatorfolien. Diese können beispielsweise durch ein Laminierverfahren miteinander verbunden werden und insbesondere anschließend mindestens einem Sinterschritt unterzogen werden.

Das Festelektrolytmaterial, aus welchem der erste Festelektrolyt und der zweite Festelektrolyt gebildet werden, kann insbesondere mindestens ein Metalloxid aufweisen, insbesondere mindestens ein Zirkonoxid, insbesondere Zirkondioxid (ZrO₂). Das Metalloxid kann insbesondere mit einem oder mehreren der folgenden Dotierstoffe stabilisiert und/oder dotiert sein: Scandium, Yttrium, Cer, Kalzium. Insbesondere kann es sich bei dem Festelektrolytmaterial um Yttrium- und/oder Scandium- und/oder Kalzium- und/oder Cer-dotiertes Zirkondioxid handeln.

Für das Trägerelement wurde oben lediglich gefordert, dass dieses eine geringere Ionenleitfähigkeit aufweist als das Festelektrolytmaterial. Weisen das Trägerelement und/oder das Festelektrolytmaterial auch eine elektrische Leitfähigkeit auf, was vorzugsweise nicht der Fall ist, so sollte weiterhin die elektrische Leitfähigkeit des Trägerelements geringer ausgestaltet sein als die elektrische Leitfähigkeit des Festelektrolytmaterials. Vorzugsweise ist die Ionenleitfähigkeit des Trägerelements um mindestens einen Faktor 10, vorzugsweise um mindestens einen Faktor 100 oder sogar um mindestens einen Faktor 1000 geringer als die lonenleitfähigkeit des Festelektrolytmaterials. Diese Verhältnisse können vorzugsweise auch, falls gegeben, für eine elektrische Leitfähigkeit gelten. Alternativ zu einer vollständig isolierenden Eigenschaft kann das Trägerelement also auch eine zumindest geringfügige ionisch leitfähige Eigenschaft und/oder elektrisch leitfähige Eigenschaft aufweisen. So kann auch das Trägerelement beispielsweise mindestens ein Festelektrolytmaterial umfassen, beispielsweise mindestens ein Metalloxid, vorzugsweise dasselbe Metalloxid, welches auch für das Festelektrolytmaterial der Zellen verwendet wird. In diesem Fall kann das Metalloxid beispielsweise mit einer geringeren Dotierung ausgestaltet sein als das Festelektrolytmaterial der ersten Zelle und/oder der zweiten Zelle. Auf diese Weise ist aufgrund der Verwendung desselben Matrixmaterials in Form des Metalloxids eine gute Prozesskompatibilität gegeben, so dass beispielsweise das Trägerelement und das Festelektrolytmaterial der Zellen ähnliche Ausdehnungseigenschaften aufweisen und/oder ähnliche thermomechanische Eigenschaften. Dabei können das Festelektrolytmaterial der ersten Zelle und der zweiten Zelle identisch oder auch unterschiedlich ausgestaltet sein. Beispielsweise kann das Festelektrolytmaterial des Trägerelements ein mit Zirkondioxid versetzes Aluminiumoxid aufweisen.

Das Trägerelement kann insbesondere ganz oder teilweise als Rahmen ausgestaltet sein, welcher die mindestens eine erste Zelle und/oder die mindestens eine zweite Zelle zumindest teilweise umschließt. Beispielsweise kann dieser Rahmen eine oder mehrere Folien des Trägerelements umfassen, in welche mindestens eine vollständig geschlossene oder zumindest teilweise geschlossene Öffnung eingebracht ist. Beispielsweise kann das Trägerelement mindestens eine Folie aufweisen, in welche die mindestens eine Öffnung vor dem Laminieren und/oder vor dem Sintern eines Schichtaufbaus eingestanzt, eingeschnitten oder auf andere Weise eingebracht ist, beispielsweise durch ein mechanisches Verfahren und/oder ein Laserverfahren. Auf diese Weise kann beispielsweise eine Inlay-Technik realisiert werden, bei welchem in das Trägerelement bzw. die mindestens eine Öffnung des Trägerelements der erste Festelektrolyt und/oder der zweite Festelektrolyt und/oder gegebenenfalls weitere Festelektrolyten in Form von Einlagen eingesetzt werden können. Beispielsweise können diese Einlagen vor dem Sintern eine Dicke zwischen 150 und 750 µm aufweisen und nach dem Sintern eine Dicke zwischen 50 und 250 µm. Auch andere Dicken sind grundsätzlich möglich. Dabei können der erste Festelektrolyt und/oder der zweite Festelektrolyt jeweils genau eine Öffnung des Rahmens umfassen, oder es können für die Erzeugung des ersten Festelektrolyten und/oder des zweiten Festelektrolyten auch mehrere Öffnungen vorgesehen sein. Beispielsweise kann die erste Zelle eine Mehrzahl, also mindestens zwei, drei oder mehrere, Öffnungen in dem Trägerelement umfassen, welche jeweils ganz oder teilweise mit dem ersten Festelektrolyten ausgefüllt sind, beispielsweise in Form eines Wabenmusters und/oder in Form mehrerer kreisförmiger oder polygonaler Einlagen. Auf analoge Weise können die zweite Zelle und/oder gegebenenfalls weitere in dem Sensorelement umfasste Zellen ausgestaltet sein.

Durch die genannte Inlay-Technologie, bei welcher das Trägerelement vorzugsweise mindestens eine Öffnung aufweist, beispielsweise mindestens eine Öffnung pro Zelle, in welche das Festelektrolytmaterial des ersten Festelektrolyten und/oder des zweiten Festelektrolyten und/oder gegebenenfalls weiterer Festelektrolyten weiterer Zellen eingebracht ist, insbesondere in Form mindestens einer Einlage, bietet sich die Möglichkeit einer getrennten Optimierung des Festelektrolytmaterials der Festelektrolyten und des Trägerelements. So kann das Material des Trägerelements bezüglich der mechanischen Stabilität optimiert werden und/oder bezüglich der Isolationseigenschaften. Das Festelektrolytmaterial kann hingegen hinsichtlich der elektrischen und/oder elektrolytischen Eigenschaften optimiert werden. So kann das Festelektrolytmaterial des ersten und/oder des zweiten Festelektrolyten beispielsweise mit einer höheren Dotierung versehen werden als dies bei üblichen Sensorelementen der Fall ist, so dass gegebenenfalls eine höhere Ionenleitfähigkeit realisiert werden kann. Aufgrund der Tatsache, dass das Festelektrolytmaterial durch das umgebende Trägerelement mechanisch stabilisiert werden kann, kann die in der Regel mit einer höheren Dotierung verbundene Verringerung an mechanischer Festigkeit in Kauf genommen werden.

Weitere vorteilhafte Ausgestaltungen betreffen die Ausgestaltung der ersten Zelle und/oder der zweiten Zelle. So können die in den Elektrodenhohlräumen angeordneten Elektroden der ersten Zelle und der zweiten Zelle insbesondere unterschiedliche Eigenschaften aufweisen, so dass diese beispielsweise unterschiedlich auf das Gas und/oder mit einzelnen Komponenten des Gases reagieren. Beispielsweise können die zweite Elektrode und die vierte Elektrode unterschiedliche katalytische Eigenschaften aufweisen. So kann beispielsweise die zweite Elektrode derart ausgestaltet sein, dass diese eine geringere katalytische Aktivität aufweist als die vierte Elektrode, beispielsweise eine geringere katalytische Aktivität für eine Zersetzung von Stickoxiden. Beispielsweise kann zu diesem Zweck die zweite Elektrode zur Verringerung ihrer katalytischen Eigenschaften "vergiftet" sein, indem dieser beispielsweise mindestens ein Katalysatorgift beigemischt oder auf andere Weise beigegeben wird, insbesondere um eine Stickoxid-Zersetzung zu verhindern. Beispielsweise kann die zweite Elektrode mit Gold vergiftet sein, beispielsweise in Form einer Gold-vergifteten Platin-Elektrode oder Platin-Cermet-Elektrode, um eine Stickoxid-Zersetzung zu verhindern. Auf diese Weise kann beispielsweise in dem ersten Elektrodenhohlraum durch Ausgestaltung der mindestens einen ersten Zelle als Pumpzelle ein zumindest teilweiser Abtransport des in dem ersten Elektrodenhohlraum vorhandenen Sauerstoffs erfolgen, ohne dass eine Stickoxid-Zersetzung stattfindet. Auf diese Weise können Stickoxide in dem ersten Elektrodenhohlraum aufkonzentriert werden und beispielsweise über das Begrenzungselement in den zweiten Elektrodenhohlraum gelangen. In dem zweiten Elektrodenhohlraum, in welchem mindestens eine vierte Elektrode angeordnet ist, kann dann beispielsweise eine Zersetzung der Stickoxide unter Bildung von Sauerstoff, stattfinden, beispielsweise indem NOx in Sauerstoff und Stickstoff zersetzt wird oder in Stickoxide mit geringeren Oxidationsstufen. Der dann in der zweiten Zelle gemessene Pumpstrom kann dann beispielsweise als Maß für die Stickoxidkonzentration in dem zweiten Elektrodenhohlraum dienen.

Wie oben dargestellt, kann die mindestens eine erste Zelle auch mehrere Teilzellen umfassen, beispielsweise zwei, drei oder mehr Teilzellen. Insbesondere können diese Teilzellen unabhängig voneinander betreibbar sein, wobei diese sich jedoch auch beispielsweise mindestens ein Element teilen können, beispielsweise mindestens eine Elektrode und/oder den mindestens einen Festelektrolyten. Mindestens ein Element dieser Teilzellen sollte jedoch jeweils nur einer Teilzelle allein zugeordnet werden können. Auf diese Weise lässt sich beispielsweise durch Verwendung mehrerer Teilzellen eine Kaskade von Pumpzellen realisieren, mittels derer beispielsweise nach und nach eine Aufkonzentration bestimmter Gaskomponenten, beispielsweise durch Abtransport von Sauerstoff aus dem ersten Elektrodenhohlraum, realisiert werden kann. Die Teilzellen können dabei auch in separaten Teilräumen des ersten Elektrodenhohlraums angeordnet sein, so dass der erste Elektrodenhohlraum beispielsweise wiederum in mehrere Teilräume unterteilt werden kann, welche beispielsweise wiederum durch ein oder mehrere Begrenzungselemente voneinander getrennt sein können, beispielsweise ein oder mehrere der oben beschriebenen Begrenzungselemente. Auf diese Weise kann nach und nach ein Strom des aufkonzentrierten Gases von einer Teilzelle in die nächste Teilzelle erfolgen und/oder eine Diffusion von einer Teilzelle in die nächste Teilzelle. Nach Durchlaufen dieser Teilzellen kann dann ein Einströmen und/oder Eindiffundieren in den mindestens einen zweiten Elektrodenhohlraum erfolgen.

Das Sensorelement kann weiterhin mindestens eine Kontrollzelle umfassen. Während die erste Zelle und/oder die zweite Zelle vorzugsweise in einer Sensoranordnung oder einem bestimmungsgemäßen Verfahren zum Betrieb des Sensorelements als Pumpzellen betrieben werden, wobei jedoch ganz oder teilweise auch eine Verwendung als Nernst-Zelle möglich ist, wird die Kontrollzelle vorzugsweise als Nernst-Zelle betrieben. Die Kontrollzelle weist mindestens eine fünfte Elektrode und mindestens eine sechste Elektrode sowie mindestens einen die fünfte Elektrode und die sechste Elektrode verbindenden dritten Festelektrolyten mit mindestens einem Festelektrolytmaterial auf. Bezüglich des Festelektrolytmaterials der Kontrollzelle kann auf das oben bezüglich der Festelektrolytmaterialien der ersten und der zweiten Zelle Gesagte verwiesen werden. Der dritte Festelektrolyt kann auch ganz oder teilweise identisch mit dem ersten Festelektrolyten und/oder dem zweiten Festelektrolyten ausgestaltet sein. Die Kontrollzelle ist dabei derart ausgestaltet, dass die fünfte Elektrode in dem ersten Elektrodenhohlraum angeordnet ist. Sind mehrere erste Elektrodenhohlräume vorgesehen, so kann die fünfte Elektrode in einem, mehreren oder allen dieser ersten Elektrodenhohlräume angeordnet sein. Auch eine Verwendung mehrerer fünfter Elektroden ist denkbar. Die sechste Elektrode ist hingegen in mindestens einem Referenzgasraum angeordnet, also einem Raum, welcher vorzugsweise von dem Messgasraum getrennt ist und in welchem eine bekannte Gasatmosphäre vorliegt oder eingestellt werden kann. Beispielsweise kann es sich bei dem Referenzgasraum um einen Raum handeln, in welchem eine bekannte Sauerstoffkonzentration, insbesondere eine bekannte Luftzahl, vorliegt. Beispielsweise kann es sich bei dem Referenzgasraum um einen mit Umgebungsluft gefüllten Raum handeln. Der Referenzgasraum kann auch ganz oder teilweise als Referenzluftkanal ausgestaltet sein, beispielsweise als Referenzluftkanal, welcher mit einer Umgebung eines Verbrennungsmotors verbunden ist. Alternativ kann der Referenzgasraum jedoch auch ganz oder teilweise mit dem Messgasraum zusammengefasst werden und/oder mit dem Messgasraum verbunden werden.

Auch das Festelektrolytmaterial des dritten Festelektrolyten ist vorzugsweise in das mindestens eine Trägerelement eingebettet. Dabei kann bezüglich möglicher Ausgestaltungen dieser Einbettung auf die obige Beschreibung des ersten Festelektrolyten und/oder des zweiten Festelektrolyten verwiesen werden. Die Einbettung kann in dasselbe Trägerelement erfolgen, in welches auch der erste Festelektrolyt und/oder der zweite Festelektrolyt eingebettet ist, oder es kann eine Einbettung in ein anderes Trägerelement erfolgen. Auch der erste Festelektrolyt und der zweite Festelektrolyt können in dasselbe Trägerelement oder in verschiedene Trägerelemente eingebettet sein. Neben dem Sensorelement in einer oder mehreren der oben beschriebenen Ausführungsformen wird weiterhin eine Sensoranordnung vorgeschlagen, welche mindestens ein Sensorelement in einer oder mehreren der oben beschriebenen Ausführungsarten umfasst. Die Sensoranordnung ist weiterhin eingerichtet, um die mindestens eine erste Zelle und die mindestens eine zweite Zelle als Pumpkaskade zu betreiben, insbesondere zur Anreichung und zum Nachweis mindestens einer Gaskomponente, insbesondere von Stickoxiden. Zu diesem Zweck kann die Sensoranordnung beispielsweise mindestens eine Steuerung umfassen, beispielsweise mit einer oder mehreren elektronischen Komponenten und/oder mit einer oder mehreren Datenverarbeitungskomponenten, mittels derer das beschriebene Kaskadenprinzip realisierbar ist. Auf diese Weise kann beispielsweise in der mindestens einen ersten Zelle eine Aufkonzentration der nachzuweisenden Gaskomponente erfolgen, welche dann beispielsweise in der zweiten Zelle nachgewiesen werden kann. Die optionale dritte Zelle kann beispielsweise zur Kontrolle mindestens einer Eigenschaft in dem ersten Elektrodenhohlraum eingesetzt werden, beispielsweise zum Nachweis und/oder zur Steuerung und/oder zur Regelung eines Sauerstoffanteils (beispielsweise eines Prozentsatzes und/oder eines Partialdrucks). Die von dieser mindestens einen dritten Zelle erfasste Messgröße kann beispielsweise zur Regelung und/oder Steuerung von Pumpströmen der ersten Zelle und/oder der zweiten Zelle genutzt werden. Ein Nernst-Signal und/oder ein Pumpstrom der zweiten Zelle kann als Ausgangssignal verwendet werden, oder ein Ausgangssignal kann aus diesem Pumpstrom und/oder diesem Nernst-Signal abgeleitet werden. Dieses Ausgangssignal kann beispielsweise repräsentativ für den Anteil der mindestens einen nachzuweisenden Gaskomponente sein, beispielsweise für den Anteil an Stickoxiden im Gas im Messgasraum.

Weiterhin wird eine Verwendung eines Sensorelements in einer oder mehreren der oben beschriebenen Ausführungsarten vorgeschlagen. Gemäß dieser vorgeschlagenen Verwendung wird das Sensorelement zu einem oder mehreren der folgenden Zwecke verwendet: zum Nachweis von Stickoxiden in einem Abgas; als Sauerstoff-Breitbandsonde. Unter einer Breitbandsonde ist dabei allgemein ein Sensorelement zu verstehen, welches über einen größeren Luftzahlbereich und/oder Konzentrationsbereich einer nachzuweisenden Gaskomponente hinweg einen Anteil dieser Gaskomponente genau erfassen kann. Für mögliche Ausgestaltungen kann auf den oben zitierten Stand der Technik verwiesen werden.

Mittels der vorgeschlagenen Erfindung lassen sich die oben dargestellten Nachteile bekannter Sensorelemente und/oder Sensoranordnungen zumindest weitgehend vermeiden. So kann beispielsweise verhindert werden, dass das Trägerelement, welches als Sensorelementsubstrat dienen kann, ebenfalls aus dem keramischen Festelektrolyten, beispielsweise Yttrium-stabilisiertem Zirkondioxid (YSZ) aufgebaut werden muss. Auf diese Weise lässt sich der oben genannte Kompromiss gemäß dem Stand der Technik zwischen der thermomechanischen Festigkeit und den Funktionseigenschaften vermeiden oder optimal realisieren: Weiterhin lässt sich verhindern, dass das Trägerelement aus dem keramischen Festelektrolyten aufgebaut werden muss, so dass der hohe Aufwand der Isolation einzelner Heizer-, Elektroden- und/oder Zuleitungsbereiche, beispielsweise durch siebgedruckte Isolationsschichten, entfallen kann. Auf diese Weise lassen sich einfachere Sensorelement-Aufbauten realisieren. Die dennoch im Stand der Technik zu verzeichnenden Einschränkungen hinsichtlich der Form und der Genauigkeit müssen nicht mehr in Kauf genommen werden, da sich durch eine Optimierung der Isolationseigenschaften des Trägerelements Einkopplungen und Leckströme und die daraus resultierenden Signalveränderungen optimal vermeiden lassen. Auf diese Weise lassen sich insbesondere die Probleme bei kleinen amperometrischen Messsignalen, wie sie häufig insbesondere bei NOx-Abgassonden auftreten, vermeiden, so dass hohe Genauigkeiten und präzise Messsignale realisiert werden können.

Insbesondere mit der oben beschriebenen Inlay-Technik, beispielsweise mittels einer Einstanztechnik, lassen sich Trägerelemente realisieren, beispielsweise in Form von Trägerfolien, die in ihren Eigenschaften hauptsächlich bezüglich ihrer mechanischen und/oder thermischen (zum Beispiel thermoschock-) und/oder ihrer hydrothermalen Stabilitätseigenschaften optimiert sein können. Diese Trägerelemente können mit speziell angepassten Funktionseinlagen in Form der Festelektrolyten ausgestattet werden. Diese Technologie ermöglicht insbesondere einen monolithischen Aufbau von Sensorkeramiken, also einen Aufbau, bei welchem beispielsweise im Wesentlichen ein und dasselbe Trägerelement, welches auch aus mehreren zusammenlaminierten Lagen zusammengesetzt sein kann, zur Realisierung der äußeren Form und/oder Stabilität verwendet werden kann. Lediglich Funktionsbereiche, wie beispielsweise die Bereiche der Zellen, können mit entsprechenden Funktionseinlagen ausgestattet werden. Auf diese Weise lässt sich ein monolithischer Aufbau von Sensorkeramiken realisieren. Insbesondere lassen sich Sensorelemente realisieren, die aufgrund ihrer Funktion eine oder mehrere integrierte Nernst-Zellen und/oder eine oder mehrere integrierte Pumpzellen benötigen. Das gesamte Sensorelement kann beispielsweise aus mechanisch fester und elektrisch hochisolierender Al₂O₃-Keramik hergestellt sein, wobei nur kleine, begrenzte Bereiche, insbesondere so genannte Fenster, im Elektrodenbereich und/oder im Bereich der Zellen aus einem Festelektrolytmaterial gestaltet werden können, um die mindestens eine Nernst-Zelle und/oder die mindestens eine Pumpzelle zu realisieren. Hierbei kann erfindungsgemäß als Festelektrolytmaterial ein funktionsoptimierter Festionenleiter gewählt werden. Beispielsweise kann die Niedertemperatur-Ionenleitfähigkeit zum Beispiel durch Verwendung von Scandium-dotiertem ZrO₂ optimiert werden, ohne dass eine schwächere mechanische Festigkeit oder ein höherer Materialpreis zu verzeichnen wäre. Ein weiterer wesentlicher Vorteil ist die Vereinfachung der elektrischen Isolation zwischen den Elektrodenbereichen, den Zuleitungen und gegebenenfalls mindestens einem Heizelement. Nach dem Stand der Technik können beispielsweise auf einem leitenden Zirkondioxid-Substrat durch gedruckte Isolationsschichten Elektroden und Zuleitungen voneinander isoliert werden. Diese Lösung ist aufwändig und fehleranfällig. Durch die Verwendung eines Trägerelements in Form eines hochisolierenden Substrats können auf einfachere Weise gegebenenfalls vorhandene Heizereinkopplungs- und/oder Durchisolationsprobleme vermieden werden, und es lässt sich eine höhere Funktionsgenauigkeit erreichen. Ein weiterer Vorteil der erfindungsgemäßen Ausgestaltung besteht in der Möglichkeit der Miniaturisierung des Sensorelements im Vergleich zu bekannten Sensorelementen.

### Kurze Beschreibung der Zeichnungen

Ein Ausführungsbeispiel der Erfindung ist in der Zeichnung dargestellt und in der nachfolgenden Beschreibung näher erläutert.

Es zeigt:

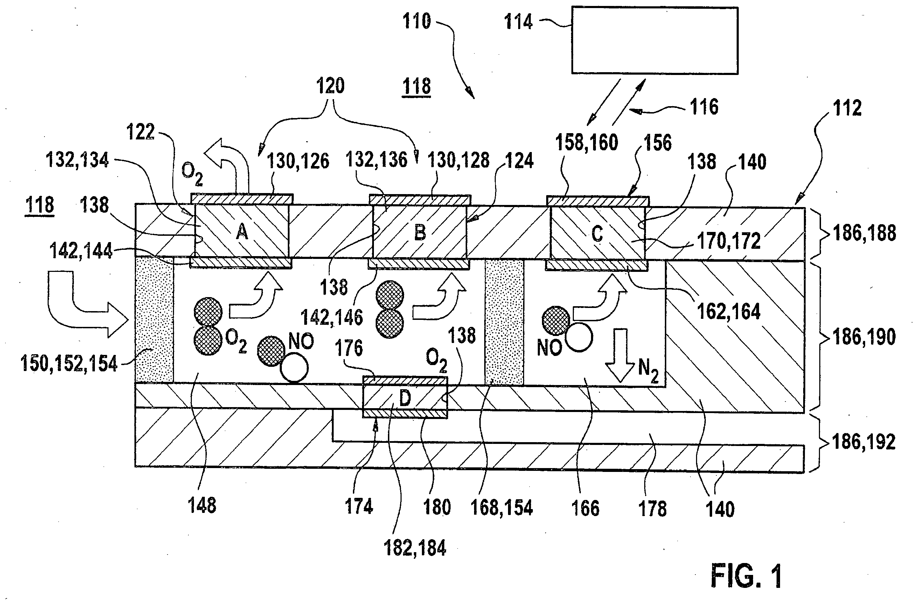

- Figur 1: ein Ausführungsbeispiel eines erfindungsgemäßen Sensorelements und einer erfindungsgemäßen Sensoranordnung.

### Ausführungsbeispiele

In Figur 1 ist exemplarisch ein Ausführungsbeispiel einer erfindungsgemäßen Sensoranordnung 110 dargestellt, welche ein erfindungsgemäßes Sensorelement 112 sowie eine mit diesem Sensorelement 112 verbundene Steuerung 114 umfasst. Die Steuerung 114 kann ganz oder teilweise, wie in Figur 1 dargestellt, als externe Steuerung ausgestaltet sein und über eine oder mehrere Schnittstellen 116 mit dem Sensorelement 112 verbunden sein. Alternativ oder zusätzlich kann die Steuerung 114 jedoch auch ganz oder teilweise in das Sensorelement 112 integriert sein, beispielsweise in ein (in Figur 1 nicht dargestelltes) Gehäuse des Sensorelements 112 und/oder einen Schichtaufbau des Sensorelements 112. Verschiedene Ausgestaltungen sind möglich. Die Steuerung 114 kann beispielsweise eine oder mehrere Stromquellen und/oder ein oder mehrere Spannungsquellen und/oder eine oder mehrere Messvorrichtungen, beispielsweise zur Strommessung und/oder zur Spannungsmessung, umfassen, welche beispielsweise mit dem Sensorelement 112 über entsprechende Zuleitungen verbunden sein können. Verschiedene Ausgestaltungen sind möglich und für den Fachmann aufgrund der nachfolgenden Beschreibung realisierbar.

Das Sensorelement 112 ist in einem Schichtaufbau ausgestaltet und in Figur 1 in einer Schnittdarstellung dargestellt. Exemplarisch ist ein Sensorelement 112 gezeigt, welches zum Nachweis von Stickoxiden in einem Messgasraum 118 ausgestaltet ist. Das Sensorelement 112 umfasst eine erste Zelle 120, welche im dargestellten Ausführungsbeispiel eine erste Teilzelle 122 und eine zweite Teilzelle 124 umfasst. Alternativ könnte die erste Zelle 120 jedoch auch lediglich eine einzige Zelle umfassen oder mehr als zwei Teilzellen. Die erste Teilzelle 122 und die zweite Teilzelle 124 umfassen jeweils eine Außenpumpelektrode 126 bzw. 128, welche jeweils als erste Elektrode 130 der ersten Zelle 120 wirken. Diese Außenpumpelektrode 126, 128 sind im dargestellten Ausführungsbeispiel direkt dem Messgasraum 118 ausgesetzt und/oder mit dem Messgasraum 118 verbunden, so dass ein Gasaustausch mit dem Messgasraum 118 möglich ist. Weiterhin umfassen die Teilzellen 122, 124 jeweils einen ersten Festelektrolyten 132. Dieser erste Festelektrolyt 132 umfasst dabei im dargestellten Ausführungsbeispiel eine der ersten Teilzelle 122 zugeordnete erste Festelektrolyteinlage 134 (in Figur 1 auch mit dem Buchstaben A bezeichnet) mit einem Festelek-trolytmaterial und eine der zweiten Teilzelle 124 zugeordnete zweite Festelektrolyteinlage 136 (in Figur 1 auch mit dem Buchstaben B bezeichnet), ebenfalls mit einem Festelektrolytmaterial. Auch eine Ausgestaltung mit mehreren ersten Festelektrolyteinlagen 134 und/oder mit mehreren zweiten Festelektrolyteinlagen 136 und/oder mit einem gemeinsamen für die Teilzellen 122, 124 ausgestalteten ersten Festelektrolyten 132 ist denkbar. Die Festelektrolyteinlagen 134, 136 sind in Öffnungen 138 in einem als Rahmen wirkenden Trägerelement 140 eingebracht, was unten noch näher erläutert wird.

Weiterhin umfasst die erste Zelle 120 zweite Elektroden 142 in Form einer der ersten Teilzelle 122 zugeordneten ersten Innenpumpelektrode 144 und einer der zweiten Teilzelle 124 zugeordneten zweiten Innenpumpelektrode 146. Die zweiten Elektroden 142 sind in einem ersten Elektrodenhohlraum 148 angeordnet, welcher über eine Verbindung 150 mit dem Messgasraum 118 mit Gas und/oder einer Gaskomponente beaufschlagbar ist. Die Verbindung 150 umfasst im dargestellten Ausführungsbeispiel ein Begrenzungselement 152, welches ein Eindiffundieren und/oder ein Einströmen von Gas aus dem Messgasraum 118 in den ersten Elektrodenhohlraum 148 oder umgekehrt zumindest begrenzt. Beispielsweise kann es sich bei diesem Begrenzungselement 152 um eine Diffusionsbarriere 154 in Form eines porösen Materials handeln. Durch dieses Begrenzungselement 152 kann beispielsweise Abgas und/oder anderes Gas aus dem Messgasraum 118 in den ersten Elektrodenhohlraum 148 einströmen und/oder eindiffundieren.

Weiterhin umfasst das Sensorelement 112 in dem dargestellten Ausführungsbeispiel mindestens eine zweite Zelle 156. Diese zweite Zelle kann, wie in dem dargestellten Ausführungsbeispiel, in derselben Schichtebene angeordnet sein wie die erste Zelle 120, kann jedoch grundsätzlich auch in einer anderen Schichtebene aufgenommen sein. Die zweite Zelle 156 umfasst im dargestellten Ausführungsbeispiel eine dritte Elektrode 158, welche als NO-Außenpumpelektrode 160 ausgestaltet und/oder betrieben werden kann, und welche im dargestellten Ausführungsbeispiel exemplarisch ebenfalls mit dem Messgasraum 118 in Verbindung steht. Weiterhin umfasst die zweite Zelle 156 eine vierte Elektrode 162, welche beispielsweise als NO-Innenpumpelektrode 164 ausgestaltet und/oder betrieben werden kann und welche in einem zweiten Elektrodenhohlraum 166 angeordnet ist. Der erste Elektrodenhohlraum 148 und der zweite Elektrodenhohlraum 166 sind über ein Begrenzungselement 168 miteinander verbunden, welches beispielsweise wiederum als Diffusionsbarriere 154 ausgestaltet sein kann. Dabei stellen im dargestellten Ausführungsbeispiel die beiden Elektrodenhohlräume 148, 166 Teilräume ein und desselben größeren Hohlraums dar, welche über das Begrenzungselement 168 voneinander getrennt sind, wobei jedoch ein Einströmen und/oder Eindiffundieren von Gas und/oder Gaskomponenten aus dem ersten Elektrodenhohlraum 148 in den zweiten Elektrodenhohlraum 166 oder umgekehrt möglich sein soll. Insbesondere kann ein Eindiffundieren und/oder Einströmen von Stickoxiden, welche in Figur 1 symbolisch mit NO bezeichnet sind, aus dem ersten Elektrodenhohlraum 148 in den zweiten Elektrodenhohlraum 166 oder umgekehrt ermöglicht werden, jedoch durch das Begrenzungselement 168 verlangsamt oder zumindest begrenzt werden.

Weiterhin weist die zweite Zelle 156, welche ebenfalls mehre Teilzellen umfassen kann, mindestens einen die dritte Elektrode 158 und die vierte Elektrode 162 verbindenden zweiten Festelektrolyten 170 auf, welcher in diesem Ausführungsbeispiel wiederum als Festelektrolyteinlage 172 mit einem Festelektrolytmaterial in einer Öffnung 138 in dem als Rahmen wirkenden Trägerelement 140 ausgestaltet ist. Die Festelektrolyteinlage 172 ist in Figur 1 auch mit dem Buchstaben C bezeichnet. Weiterhin umfasst das Sensorelement 112 in dem dargestellten Ausführungsbeispiel eine Kontrollzelle 174, welche in einer tieferen Schichtebene des Schichtaufbaus angeordnet sein kann, beispielsweise unterhalb der Elektrodenhohlräume 148, 166. Diese Kontrollzelle 174, welche ebenfalls wiederum mehrere Teilzellen umfassen kann, und welche als Nernst-Zelle betrieben werden kann, umfasst eine in dem ersten Elektrodenhohlraum 148 angeordnete fünfte Elektrode 176 und eine in einem Referenzluftkanal 178 angeordnete sechste Elektrode 180 sowie einen die fünfte Elektrode 176 und die sechste Elektrode 180 verbindenden dritten Festelektrolyten 182. Dieser dritte Festelektrolyt 182 ist im dargestellten Ausführungsbeispiel exemplarisch wiederum als Festelektrolyteinlage 184 mit einem Festelektrolytmaterial ausgestaltet, welche in eine Öffnung 138 in dem Trägerelement 140 eingebracht ist. Grundsätzlich kann die Kontrollzelle 174 jedoch auch auf konventionelle Weise hergestellt sein. Der dritte Festelektrolyt 182 ist im dargestellten Ausführungsbeispiel mit dem Buchstaben D bezeichnet. Die Steuerung 114 kann eingerichtet sein, um die erste Zelle 120 und die zweite Zelle 156 als Pumpzellen zu betreiben, wobei beispielsweise ein Pumpstrom dieser Pumpzellen erfasst werden kann. Die Kontrollzelle 174 kann beispielsweise als Nernst-Zelle betrieben werden, wobei eine, beispielsweise durch die Partialdruckdifferenz zwischen dem ersten Elektrodenhohlraum 148 und dem Referenzluftkanal 178 hinsichtlich eines Sauerstoffanteils bedingte Nernst-Spannung dieser Kontrollzelle 174 erfasst werden kann. Der Referenzluftkanal 178 kann beispielsweise ganz oder teilweise ungefüllt ausgestaltet sein, kann jedoch grundsätzlich auch ganz oder teilweise mit einem porösen, gasdurchlässigen Material angefüllt sein, beispielsweise porösem Aluminiumoxid. Auch der erste Elektrodenhohlraum 148 und/oder der zweite Elektrodenhohlraum 166 können grundsätzlich ganz oder teilweise ungefüllt ausgestaltet sein, können jedoch auch ganz oder teilweise mit einem gasdurchlässigen, porösen Material ausgefüllt sein. Das Sensorelement 112 gemäß dem in Figur 1 gezeigten Ausführungsbeispiel ist in einem Schichtaufbau hergestellt. Dabei umfasst das Trägerelement 140 beispielsweise zwei, drei oder mehr Trägerfolien 186, welche vorzugsweise aus einem Isolatormaterial, beispielsweise einem keramischen Isolatormaterial, hergestellt sein können. Insbesondere kann es sich dabei um Aluminiumoxidfolien handeln, beispielsweise Al₂O₃-Folien. Dabei ist in Figur 1 ein Ausführungsbeispiel gezeigt, in welchem drei derartige Trägerfolien 186 verwendet werden, welche beispielsweise zunächst aufeinanderlaminiert werden können, um dann einem oder mehreren Sinterschritten unterzogen werden zu können. Die Öffnungen 138 können dabei beispielsweise vor dem Laminieren in die Trägerfolien 186 eingestanzt, eingeprägt, eingeschnitten oder auf sonstige Weise eingebracht werden, so dass diese Öffnungen 138 Fenster in dem Trägerelement 140, insbesondere in den Trägerfolien 186, bilden. Bei dem in Figur 1 gezeigten Schichtaufbau bildet eine erste Trägerfolie 188 das Trägerelement 140 für die erste Zelle 120 und die zweite Zelle 156, eine zweite Trägerfolie 190 bildet das Trägerelement 140 für die Elektrodenhohlräume 148, 166 und die Kontrollzelle 174, und eine dritte Trägerfolie 192 bildet das Trägerelement 140 für den Referenzluftkanal 178. Weitere Trägerfolien 186 können vorgesehen sein, beispielsweise für ein in Figur 1 nicht dargestelltes, beispielsweise unterhalb der dritten Trägerfolie 192 angeordnetes Heizelement.

Das Trägerelement 140 weist vorzugsweise ein Trägermaterial auf, welches hinsichtlich seiner mechanischen und/oder thermomechanischen Eigenschaften und/oder seiner Isolationseigenschaften hinsichtlich der Ionenleitung und/oder elektronischer Leitung bzw. seiner Isolation optimiert sein kann. Insbesondere kann es sich dabei, wie oben dargestellt, um Al₂O₃ handeln. Dementsprechend können die Trägerfolien 186 beispielsweise Al₂O₃-Keramikfolien gleicher Materialzusammensetzung und vorzugsweise gleicher Schichtdicke umfassen. Die erste Trägerfolie 188 kann dabei die vorzugsweise eingestanzten Öffnungen 138 in Form von Fenstern für die Festelektrolyten 132, 170 umfassen. Die zweite Trägerfolie 190 kann beispielsweise die Öffnung 138 in Form vorzugsweise eines eingestanzten Fensters für den Festionenleiter in Form des dritten Festelektrolyten 182 umfassen. Die Festelektrolytmaterialien können beispielsweise Scandium-, Yttrium-, Cer- und/oder Kalzium-stabilisiertes Zirkondioxid umfassen, beispielsweise in Form der Einlagen 134, 136, 172 und 184, welche beispielsweise hinsichtlich ihrer ionenleitenden Eigenschaften optimiert sein können. Nicht dargestellt in Figur 1 sind Elektrodenzuleitungen, eine oder mehrere optionale Durchkontaktierungen (beispielsweise zur Kontaktierung der fünften Elektrode 176 und/oder der sechsten Elektrode 180), welche vorzugsweise ebenfalls innerhalb des Trägerelements 140 angeordnet sind, sowie optional ein oder mehrere Heizelemente, beispielsweise in Form eines oder mehrerer integrierter, siebgedruckter Platin-Heizer.

Die Funktionsweise der Sensoranordnung 110 soll im Folgenden kurz erläutert werden. Für weitere optionale Ausführungen kann grundsätzlich auf aus dem Stand der Technik bekannte NOx-Abgassonden verwiesen werden. Durch das Begrenzungselement 152 diffundiert Gas, beispielsweise Abgas, in den ersten Elektrodenhohlraum 148 ein. Dieses Gas umfasst beispielsweise, wie in Figur 1 angedeutet, Sauerstoff (O₂) und Stickoxide (in Figur 1 allgemein und ohne Beschränkung möglicher Oxidationsstufen mit NO bezeichnet - es könnte auch die Bezeichnung NOx verwendet werden). Dabei sind Sauerstoffatome in Figur 1 symbolisch mit ausgefüllten Kreisen dargestellt, wohingegen Stickstoffatome symbolisch mit ungefüllten Kreisen bezeichnet sind. In dem ersten Elektrodenhohlraum 148 wird mittels der ersten Zelle 120 sukzessive eine Aufkonzentration des Stickoxid-Anteils vorgenommen. So wird Sauerstoff zunächst über die erste-Teilzelle 122 aus dem ersten Elektrodenhohlraum 148 abgepumpt, so dass Stickoxide zurückbleiben. Um eine Zersetzung der Stickoxide an der zweiten Elektrode 142 zu verhindern, kann die katalytische Eigenschaft dieser zweiten Elektrode 142 beispielsweise durch eine gezielte Vergiftung verhindert oder zumindest vermindert werden. Die Teilzellen 122, 124, wobei eine, zwei oder mehrere derartiger Teilzellen vorgesehen sein können, können eine Pumpkaskade bilden, wobei sich von Teilzelle zu Teilzelle der Sauerstoffanteil im Gasgemisch verringern kann. So kann beispielsweise unterhalb der zweiten Teilzelle 124 bereits ein geringerer Sauerstoffanteil in dem Gasgemisch innerhalb des ersten Elektrodenhohlraums 148 vorliegen als unterhalb der ersten Teilzelle 122. Auf diese Weise kann eine Aufkonzentration erfolgen. Mittels der zweiten Teilzelle 124 und gegebenenfalls weiterer Teilzellen kann eine weitere Aufkonzentration erfolgen, indem weiterer Sauerstoff aus dem ersten Elektrodenhohlraum 148 abgepumpt wird. Der Sauerstoffanteil innerhalb des ersten Elektrodenhohlraums 148 und/oder an einer oder mehreren Stellen innerhalb des ersten Elektrodenhohlraums 148 kann beispielsweise mittels der mindestens einen Kontrollzelle 174, wobei auch mehrere derartiger Kontrollzellen 174 an mehreren Stellen vorgesehen sein können, überwacht und/oder gesteuert und/oder geregelt werden.

Nach Aufkonzentration des Stickoxid-Anteils können Gas und/oder Gaskomponenten aus dem ersten Elektrodenhohlraum 148 durch das Begrenzungselement 168 in den zweiten Elektrodenhohlraum 166 gelangen. Bei ausreichender Funktion der ersten Zelle 120 kann es sich bei diesem in den zweiten Elektrodenhohlraum 166 gelangenden Gas praktisch ausschließlich um Stickoxide handeln. An der vierten Elektrode 162 werden diese Stickoxide, wie in Figur 1 symbolisch dargestellt, zersetzt, vorzugsweise katalytisch. Dabei kann Stickstoff freigesetzt werden, welcher im zweiten Elektrodenhohlraum 166 verbleiben oder auch aus diesem entweichen kann, beispielsweise durch eine in Figur 1 nicht dargestellte Öffnung. Bei der Zersetzung gebildeter Sauerstoff kann hingegen an der vierten Elektrode 162 in den zweiten Festelektrolyten 170 eingebaut und zur dritten Elektrode 158 gepumpt werden. Der bei dieser Zersetzung von Stickoxiden in Stickstoff und Sauerstoff und/oder in Sauerstoff und Stickoxide geringerer Oxidationsstufe gebildete Pumpstrom durch die zweite Zelle 156, welcher beispielsweise von der Steuerung 114 erfasst werden kann, kann als Reduktionsstrom das eigentliche Messsignal der Sensoranordnung 110 und/oder des Sensorelements 112 bilden. Dieser Reduktionsstrom kann beispielsweise ein Maß für einen Stickoxid-Anteil in dem Gas des Messgasraums 118 darstellen.

Das in Figur 1 dargestellte Ausführungsbeispiel stellt lediglich ein mögliches Ausführungsbeispiel eines elektrochemischen Abgassensors mit einem keramischen Sensorelement 112 mit mindestens einer ersten Zelle 120 und mindestens einer zweiten Zelle 156 dar. Beispielsweise kann es sich bei diesen Zellen um Nernst- und/oder Pumpzellen handeln. Das Sensorelement 112 kann aufgrund der Verwendung eines gemeinsamen Trägerelements 140 insbesondere monolithisch ausgestaltet sein, insbesondere ganzheitlich aus einem festigkeits- und elektrisch isolationsoptimierten keramischen Oxid gefertigt werden. Durch die beschriebene Einlagentechnik mittels der Festelektrolyteinlagen, die optimierte ionenleitende Eigenschaften aufweisen können, lassen sich die Funktionen der einzelnen Komponenten des Sensorelements 112 getrennt optimieren. Das Sensorelement 112 kann, wie oben beschrieben, vorzugsweise aus mindestens drei einzelnen und bedruckbaren keramischen Folien in Form der Trägerfolien 186 hergestellt werden, welche insbesondere gleiche Zusammensetzung aufweisen können. Beispielsweise können diese zusammenlaminiert und anschließend einem oder mehreren Sinterprozessen unterzogen werden. Die Trägerfolien 186 können beispielsweise Folien aus einem Aluminiumoxid mit einem Fremdphasenanteil von weniger als 5 % umfassen und/oder aus einem Aluminiumoxid mit einem Glasphasenanteil von bis zu 50 %. Die Öffnungen 138 können insbesondere durch Stanzen erzeugt werden. Die Öffnungen 138 können bei der Herstellung des Schichtaufbaus vor dem Einbringen der Festelektrolyteinlagen 134, 136, 172 und 184 eingebracht werden. Die Dicke der Festelektrolyteinlagen kann beispielsweise vor dem Sintern 250 bis 750 µm betragen und nach dem Sintern 50 bis 250 µm.

Das in Figur 1 dargestellte elektrochemische Sensorelement 112 kann beispielsweise, wie oben dargestellt, als NOx-Abgassonde eingesetzt werden. Bei dem mehrzelligen Aufbau, bei welchem vorzugsweise eine, zwei oder mehrere Pumpzellen vorgesehen sind und optional eine, zwei oder mehr Nernst-Zellen, machen sich die oben beschriebenen Optimierungsvorteile der Erfindung besonders günstig bemerkbar, da diese Vielzahl von Zellen in der Regel eine Vielzahl von Elektrodenzuleitungen erforderlich machen. Bei dieser Vielzahl von Elektrodenzuleitungen und gegebenenfalls weiterhin mindestens einem Heizelement machen sich die oben beschriebenen elektronischen Probleme, insbesondere ein Übersprechen und/oder Einkoppeln, in herkömmlichen Aufbauten besonders stark bemerkbar. Da im erfindungsgemäßen Aufbau das Trägerelement 140 insbesondere hinsichtlich seiner Isolationseigenschaften und/oder Festigkeitseigenschaften optimiert werden kann, kann ein Übersprechen bzw. elektrisches Einkoppeln in einem derartigen erfindungsgemäßen Aufbau auch bei einer Vielzahl von Elektrodenzuleitungen und/oder einer Mehrzahl von Durchkontaktierungen sicher gewährleistet werden.

## Patentansprüche

1. Sensorelement (112) zur Bestimmung mindestens einer Eigenschaft eines Gases in einem Messgasraum (118), insbesondere zum Nachweis einer Gaskomponente in einem Gasgemisch, umfassend mindestens eine erste Zelle (120) und mindestens eine zweite Zelle (156), wobei die erste Zelle (120) mindestens eine erste Elektrode (130), mindestens eine zweite Elektrode (142) und mindestens einen die erste Elektrode (130) und die zweite Elektrode (142) verbindenden ersten Festelektrolyten (132) aufweist, wobei die zweite Zelle (156) mindestens eine dritte Elektrode (158), mindestens eine vierte Elektrode (162) und mindestens einen die dritte Elektrode (158) und die vierte Elektrode (162) verbindenden zweiten Festelektrolyten (170) aufweist, wobei die zweite Elektrode (142) in mindestens einem ersten Elektrodenhohlraum (148) angeordnet ist, wobei die vierte Elektrode (162) in mindestens einem zweiten Elektrodenhohlraum (166) angeordnet ist, wobei der erste Elektrodenhohlraum (148) mit Gas aus dem Messgasraum (118) beaufschlagbar ist, wobei der zweite Elektrodenhohlraum (166) mit Gas aus dem ersten Elektrodenhohlraum (148) beaufschlagbar ist, wobei der erste Festelektrolyt (132) und der zweite Festelektrolyt (170) jeweils ein Festelektrolytmaterial aufweisen, wobei das Festelektrolytmaterial jeweils in ein Trägerelement (140) eingebettet ist, welches eine geringere ionische Leitfähigkeit und eine höhere mechanische Festigkeit aufweist als das Festelektrolytmaterial.

2. Sensorelement (112) nach dem vorhergehenden Anspruch, wobei der erste Elektrodenhohlraum (148) und der zweite Elektrodenhohlraum (166) durch mindestens ein Begrenzungselement (168) getrennt sind, wobei das Begrenzungselement (168) einen Strom und/oder eine Diffusion des Gases oder mindestens einer Gaskomponente des Gases zumindest teilweise begrenzt, insbesondere durch eine Diffusionsbarriere (154).

3. Sensorelement (112) nach einem der vorhergehenden Ansprüche, wobei das Trägerelement (140) mindestens ein Trägermaterial aufweist, insbesondere aus mindestens einem Trägermaterial besteht, wobei das Trägermaterial mindestens ein Isolatormaterial umfasst, wobei das Isolatormaterial mindestens eines der folgenden Materialien aufweist oder aus einem der folgenden Materialien besteht: ein keramisches Isolatormaterial, insbesondere ein Aluminiumoxid, insbesondere Al₂O₃; ein keramisches Oxid, insbesondere ein Aluminiumoxid; ein keramisches Oxid, insbesondere ein Aluminiumoxid, mit einem Fremdphasenanteil von weniger als 5%; ein keramisches Oxid, insbesondere ein Aluminiumoxid, mit einem Glasphasenanteil von bis zu 50%.

4. Sensorelement (112) nach einem der vorhergehenden Ansprüche, wobei das Sensorelement (112) einen Schichtaufbau aufweist, wobei der Schichtaufbau mindestens zwei Trägerelemente (140), vorzugsweise drei oder mehr Trägerelemente (140), in Form von keramischen Folien umfasst, welche miteinander verbunden sind, insbesondere durch ein Laminierverfahren.

5. Sensorelement (112) nach einem der vorhergehenden Ansprüche, wobei das Trägerelement (140) zumindest teilweise als Rahmen ausgestaltet ist, wobei der Rahmen die mindestens eine erste Zelle (120) und/oder die mindestens eine zweite Zelle (156) zumindest teilweise umschließt, insbesondere den ersten Festelektrolyten (132) und/oder den zweiten Festelektrolyten (170).

6. Sensorelement (112) nach einem der vorhergehenden Ansprüche, wobei die zweite Elektrode (142) und die vierte Elektrode (162) unterschiedliche katalytische Eigenschaften aufweisen.

7. Sensorelement (112) nach dem vorhergehenden Anspruch, wobei die mindestens eine erste Zelle (120) mindestens zwei Teilzellen (122, 124) umfasst, insbesondere mindestens zwei unabhängig voneinander betreibbare Teilzellen (122, 124).

8. Sensorelement (112) nach einem der vorhergehenden Ansprüche, weiterhin umfassend mindestens eine Kontrollzelle (174), wobei die Kontrollzelle (174) mindestens eine fünfte Elektrode (176) und mindestens eine sechste Elektrode (180) sowie mindestens einen die fünfte Elektrode (176) und die sechste Elektrode (180) verbindenden dritten Festelektrolyten (182) mit mindestens einem Festelektrolytmaterial aufweist, wobei die fünfte Elektrode (176) in dem ersten Elektrodenhohlraum (148) angeordnet ist und wobei die sechste Elektrode (180) in mindestens einem Referenzgasraum, insbesondere einem Referenzluftkanal (178), angeordnet ist, wobei das Festelektrolytmaterial in das mindestens eine Trägerelement (140) eingebettet ist.

9. Sensoranordnung (110), umfassend mindestens ein Sensorelement (112) nach einem der vorhergehenden Ansprüche, wobei die Sensoranordnung (110) eingerichtet ist, um die mindestens eine erste Zelle (120) und die mindestens eine zweite Zelle (156) als Pumpkaskade zu betreiben, insbesondere zur Anreicherung und zum Nachweis von Stickoxiden.

10. Verwendung eines Sensorelements (112) nach einem der vorhergehenden, ein Sensorelement (112) betreffenden Ansprüche zu einem oder mehreren der folgenden Zwecke: zum Nachweis von Stickoxiden in einem Abgas; als Sauerstoff-Breitbandsonde.

## Claims

1. Sensor element (112) for determining at least one property of a gas in a measuring gas chamber (118), in particular for detecting a gas component in a gas mixture, comprising at least one first cell (120) and at least one second cell (156), wherein the first cell (120) has at least one first electrode (130), at least one second electrode (142) and at least one first solid electrolyte (132) connecting the first electrode (130) and the second electrode (142), wherein the second cell (156) comprises at least one third electrode (158), at least one fourth electrode (162) and at least one second solid electrolyte (170) connecting the third electrode (158) and the fourth electrode (162), wherein the second electrode (142) is arranged in at least one first electrode cavity (148), wherein the fourth electrode (162) is arranged in at least one second electrode cavity (166), wherein gas from the measuring gas chamber (118) can be admitted to the first electrode cavity (148), wherein gas from the first electrode cavity (148) can be admitted to the second electrode cavity (166), wherein the first solid electrolyte (132) and the second solid electrolyte (170) each comprise one solid electrolyte material, wherein the solid electrolyte material is respectively embedded in one carrier element (140), which has a lower ionic conductivity and a higher mechanical strength than the solid electrolyte material.

2. Sensor element (112) according to the preceding claim, wherein the first electrode cavity (148) and the second electrode cavity (166) are separated by at least one bounding element (168), wherein the bounding element (168) at least partially bounds a flow and/or a diffusion of the gas, or at least a gas component of the gas, in particular by a diffusion barrier (154).

3. Sensor element (112) according to one of the preceding claims, wherein the carrier element (140) comprises at least one carrier material, in particular consists of at least one carrier material, wherein the carrier material comprises at least one insulator material, wherein the insulator material comprises at least one of the following materials or consists of one of the following materials: a ceramic insulator material, in particular an aluminium oxide, in particular Al₂O₃ ; a ceramic oxide, in particular an aluminium oxide; a ceramic oxide, in particular an aluminium oxide, with a foreign phase fraction of less than 5%; a ceramic oxide, in particular an aluminium oxide, with a glass phase fraction of up to 50%.

4. Sensor element (112) according to one of the preceding claims, wherein the sensor element (112) has a layered structure, wherein the layered structure comprises at least two carrier elements (140), preferably three or more carrier elements (140), in the form of ceramic sheets, which are connected to one another, in particular by a laminating process.

5. Sensor element (112) according to one of the preceding claims, wherein the carrier element (140) is at least partially configured as a frame, wherein the frame at least partially encloses the at least one first cell (120) and/or the at least one second cell (156), in particular the first solid electrolyte (132) and/or the second solid electrolyte (170).

6. Sensor element (112) according to one of the preceding claims, wherein the second electrode (142) and the fourth electrode (162) have different catalytic properties.

7. Sensor element (112) according to the preceding claim, wherein the at least one first cell (120) comprises at least two part-cells (122, 124), in particular at least two part-cells (122, 124) that can be operated independently of one another.

8. Sensor element (112) according to one of the preceding claims, further comprising at least one control cell (174), wherein the control cell (174) has at least one fifth electrode (176) and at least one sixth electrode (180) and also at least one third solid electrolyte (182) connecting the fifth electrode (176) and the sixth electrode (180) and comprising at least one solid electrolyte material, wherein the fifth electrode (176) is arranged in the first electrode cavity (148) and wherein the sixth electrode (180) is arranged in at least one reference gas chamber, in particular a reference air channel (178), wherein the solid electrolyte material is embedded in the at least one carrier element (140).

9. Sensor arrangement (110), comprising at least one sensor element (112) according to one of the preceding claims, wherein the sensor arrangement (110) is designed to operate the at least one first cell (120) and the at least one second cell (156) as a pumping cascade, in particular for the enrichment and detection of nitrogen oxides.

10. Use of a sensor element (112) according to one of the preceding claims concerning a sensor element (112) for one or more of the following purposes: for the detection of nitrogen oxides in an exhaust gas; as an oxygen wide-band probe.

## Revendications

1. Élément de détection (112) pour déterminer au moins une propriété d'un gaz dans un espace de mesure de gaz (118), notamment pour prouver la présence d'une composante gazeuse dans un mélange gazeux, comprenant au moins une première cellule (120) et au moins une deuxième cellule (156), la première cellule (120) présentant au moins une première électrode (130), au moins une deuxième électrode (142) et au moins un premier électrolyte solide (132) qui relie la première électrode (130) et la deuxième électrode (142), la deuxième cellule (156) présentant au moins une troisième électrode (158), au moins une quatrième électrode (162) et au moins un deuxième électrolyte solide (170) qui relie la troisième électrode (158) et la quatrième électrode (162), la deuxième électrode (142) étant disposée dans au moins un premier espace creux d'électrode (148), la quatrième électrode (162) étant disposée dans au moins un deuxième espace creux d'électrode (166), le premier espace creux d'électrode (148) pouvant être alimenté avec du gaz en provenance de l'espace de mesure de gaz (118), le deuxième espace creux d'électrode (166) pouvant être alimenté avec du gaz en provenance du premier espace creux d'électrode (148), le premier électrolyte solide (132) et le deuxième électrolyte solide (170) présentant respectivement un matériau d'électrolyte solide, le matériau d'électrolyte solide étant à chaque fois enrobé dans un élément porteur (140) qui présente une conductivité ionique plus faible et une résistance mécanique plus élevée que le matériau d'électrolyte solide.

2. Élément de détection (112) selon la revendication précédente, avec lequel le premier espace creux d'électrode (148) et le deuxième espace creux d'électrode (166) sont séparés par au moins un élément de séparation (168), l'élément de séparation (168) limitant au moins partiellement un courant et/ou une diffusion du gaz ou d'au moins une composante gazeuse du gaz, notamment par une barrière de diffusion (154).

3. Élément de détection (112) selon l'une des revendications précédentes, avec lequel l'élément porteur (140) présente au moins un matériau porteur, en particulier se compose d'au moins un matériau porteur, le matériau porteur comprenant au moins un matériau isolant, le matériau isolant présentant au moins l'un des matériaux suivants ou se composant de l'un des matériaux suivants : un matériau isolant en céramique, notamment un oxyde d'aluminium, notamment de l'Al₂O₃ ; un oxyde de céramique, notamment un oxyde d'aluminium ; un oxyde de céramique, notamment un oxyde d'aluminium, ayant une proportion de phase étrangère inférieure à 5 % ; un oxyde de céramique, notamment un oxyde d'aluminium, ayant une proportion de phase vitreuse maximale de 50 %.

4. Élément de détection (112) selon l'une des revendications précédentes, l'élément de détection (112) présentant une structure en couches, la structure en couches comprenant au moins deux éléments porteurs (140), de préférence trois éléments porteurs (140) ou plus, sous la forme de films en céramique qui sont reliés ensemble, notamment par un procédé de laminage.

5. Élément de détection (112) selon l'une des revendications précédentes, avec lequel l'élément porteur (140) est au moins partiellement configuré sous la forme d'un cadre, le cadre entourant au moins partiellement l'au moins une première cellule (120) et/ou l'au moins une deuxième cellule (156), notamment le premier électrolyte solide (132) et/ou le deuxième électrolyte solide (170).

6. Élément de détection (112) selon l'une des revendications précédentes, avec lequel la deuxième électrode (142) et la quatrième électrode (162) présentent des propriétés catalytiques différentes.

7. Élément de détection (112) selon la revendication précédente, avec lequel l'au moins une première cellule (120) comprend au moins deux cellules partielles (122, 124), notamment au moins deux cellules partielles (122, 124) pouvant fonctionner indépendamment l'une de l'autre.

8. Élément de détection (112) selon l'une des revendications précédentes, comprenant en outre au moins une cellule de contrôle (174), la cellule de contrôle (174) présentant au moins une cinquième électrode (176), au moins une sixième électrode (180) et au moins un troisième électrolyte solide (182) ayant au moins un matériau d'électrolyte solide et reliant la cinquième électrode (176) et la sixième électrode (180), la cinquième électrode (176) étant disposée dans le premier espace creux d'électrode (148) et la sixième électrode (180) étant disposée dans au moins un espace à gaz de référence, notamment un canal à air de référence (178), le matériau d'électrolyte solide étant enrobé dans l'au moins un élément porteur (140).

9. Arrangement de détection (110), comprenant au moins un élément de détection (112) selon l'une des revendications précédentes, l'arrangement de détection (110) étant conçu pour faire fonctionner l'au moins une première cellule (120) et l'au moins une deuxième cellule (156) en tant que cascade de pompage, notamment pour l'enrichissement et pour prouver la présence d'oxydes d'azote.

10. Utilisation d'un élément de détection (112) selon l'une des revendications précédentes concernant un élément de détection (112) à une ou plusieurs des fins suivantes : prouver la présence d'oxydes d'azote dans des gaz d'échappement ; en tant que sonde à large bande à oxygène.
